# EUROPÄISCHE PATENTANMELDUNG

(11) **EP 4 821 877 A1**
(43) Veröffentlichungstag der Anmeldung: **14.10.2026**
(21) Anmeldenummer: 26165301.8
(22) Anmeldetag: 17.03.2026
(51) Int. Cl.: B66F 9/075, B66F 17/00

(54) **LASTAUFNAHMEVORRICHTUNG**

(30) Priorität: 04.04.2025 DE 102025113232
(71) Anmelder: Vetter Industrie GmbH, 57299 Burbach (DE); AKL-tec GmbH, 57518 Alsdorf (DE)
(72) Erfinder: Vetter, Arnold, Wilnsdorf (DE); Brenner, Tim, Scheuerfeld (DE); Elben, Rüdiger, Wilnsdorf (DE)
(74) Vertreter: Klüppel, Walter

(57) **Zusammenfassung**

Die vorliegende Erfindung betrifft eine Lastaufnahmevorrichtung 100 mit einem Grundkörper 108 in Form einer Gabelzinke oder eines Greifarmes eines Flurförderfahrzeugs. An den Grundkörper ist mindestens ein digitaler Sensor 110 angeordnet zum Erzeugen von digitalen Bilddaten und der Lastaufnahmevorrichtung ist eine Auswerteeinrichtung 120 zugeordnet zum Auswerten der digitalen Bilddaten. Um eine genauere Bestimmung des Volumens einer aufgenommen Last auch bei einer nicht-homogenen Kubatur an der dem Flurförderfahrzeug 20 abgewandten Schattenseite der Last 30 zu ermöglichen, sieht die Erfindung vor, dass der digitale Sensor 110 an dem Grundkörper 108 insbesondere in den Raum vor der Lastaufnahmevorrichtung 100 ausfahrbar ist, wobei der Sensor in eine bezogen auf eine Ausfahrrichtung R rückwärtsgewandte Blickrichtung ausgerichtet ist zum Erzeugen der digitalen Bilder zumindest von Teilen der Schattenseite der Last.

## Beschreibung

Die vorliegende Erfindung betrifft eine Lastaufnahmevorrichtung mit einem Grundkörper in Form einer Gabelzinke oder eines Greifarmes eines Flurförderfahrzeugs zum Aufnehmen einer Last. Darüber hinaus betrifft die Erfindung ein zugehöriges Flurförderfahrzeug, z. B. einen Gabelstapler sowie ein Verfahren zum Betreiben des Flurförderfahrzeugs mit der erfindungsgemäßen Lastaufnahmevorrichtung.

Flurförderfahrzeuge mit Lastaufnahmevorrichtungen, beispielsweise in Form von Gabelzinken oder Greifarmen, sowie Verfahren zu deren Betrieb sind im Stand der Technik grundsätzlich bekannt.

Im logistischen Umfeld, d. h. zum Beispiel bei Speditionen oder Luftfrachtintegratoren besteht die Notwendigkeit, oftmals die Dimensionen bzw. das Volumen einer Last bzw. Fracht, die von dem Flurförderfahrzeug aufgenommen wird, möglichst genau zu bestimmen. Zu diesem Zweck offenbart z. B. die internationale Patentanmeldung WO 2022/197500 A1 ein an einem Flurförderfahrzeug angebrachtes System zur Bestimmung der Abmessungen der aufgenommenen Fracht. Konkret sieht das System vor, dass ein oder mehrere Sensoren, beispielsweise Radarsensoren, akustische Sensoren oder Kameras oder Lidars an dem Flurförderfahrzeug, beispielsweise an dessen Anbaugerät, insbesondere an dessen Hubmast, angebracht sind und von dort die Last auf den Gabelzinken vermessen. Dazu senden die Sensoren beispielsweise ein Radarsignal oder Lichtsignal aus und aus den von der Last reflektierten Signalanteilen kann mit Hilfe einer Auswerteeinrichtung auf die Dimensionen, die Form oder das Volumen der Last rückgeschlossen werden.

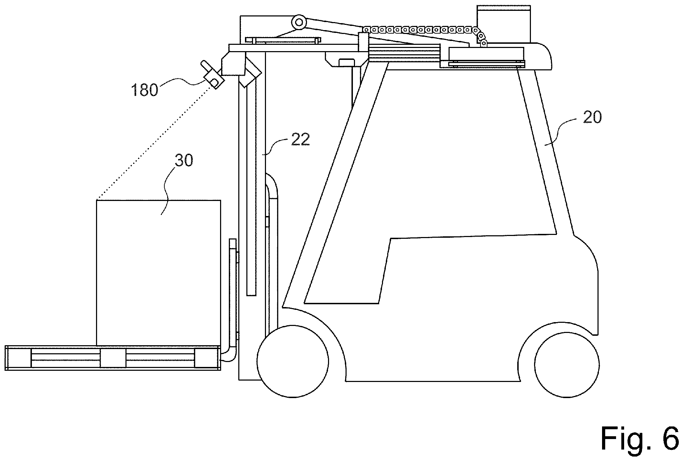

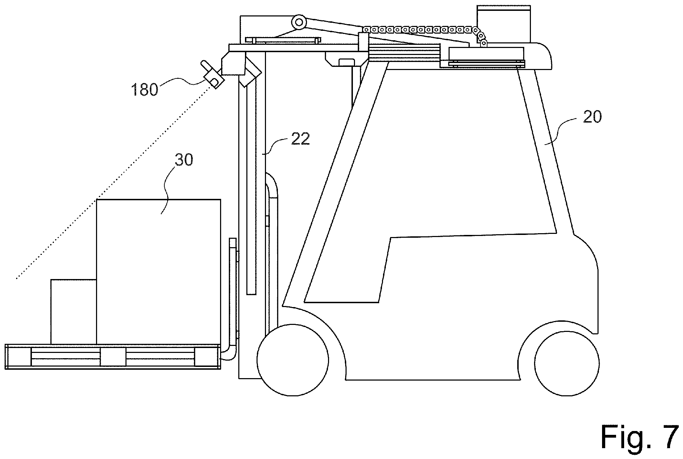

Solange die Last eine reguläre, z. B. quaderförmige Form hat, wie z. B. eine Holzkiste oder ein Karton, liefern das bekannte System und Verfahren bei Unterstellung einer regulären Kubatur gute Ergebnisse; siehe Figur 6. Allerdings müssen mitunter auch irregulär geformte Objekte transportiert und vermessen werden; dann sind die von den bekannten Systemen und Verfahren ermittelten Volumenwerte nicht mehr hinreichend genau, denn sie unterstellen - wie gesagt - bei ihrer Berechnung regelmäßig eine reguläre Kubatur, d. h. Gestalt oder Struktur, der Last auch an den Schattenseiten oder Schattenflächen der Last, die nicht im Blickfeld des an dem Flurförderfahrzeug angebrachten Sensors liegen; siehe Figur 7. Die ermittelten Volumina sind in diesen Fällen typischerweise für eine Verwendung im Rechts- und Geschäftsverkehr nicht hinreichend genau.

Der Erfindung liegt die Aufgabe zugrunde, eine bekannte Lastaufnahmevorrichtung, ein bekanntes Flurförderfahrzeug sowie ein bekanntes Verfahren zum Betreiben des Flurförderfahrzeugs dahingehend weiterzubilden, dass eine genauere Volumenbestimmung einer aufgenommenen Last auch bei einer irregulären, d. h. nicht-homogenen Kubatur bei der dem Flurförderfahrzeug abgewandten Schattenseite der Last möglich wird.

Diese Aufgabe wird bezüglich der Lastaufnahmevorrichtung durch den Gegenstand des Anspruchs 1 gelöst. Demnach ist die erfindungsgemäße Aufnahmevorrichtung dadurch gekennzeichnet, dass eine Verfahreinrichtung vorhanden ist, zum Ausfahren des Sensors in einer Ausfahrrichtung in die Umgebung der Lastaufnahmevorrichtung, insbesondere - von dem Flurförderfahrzeug aus gesehen - in den Raum vor der Lastaufnahmevorrichtung, und zurück; und dass der Sensor in eine bezogen auf die Ausfahrrichtung rückwärtsgewandte Blickrichtung ausgerichtet ist zum Erzeugen der digitalen Bilddaten von zumindest Teilen der Schattenseite der Last.

Der Begriff "Flurförderfahrzeug" meint ein von einer Bedienperson gefahrenes oder autonom fahrendes Transportfahrzeug, insbesondere einen Gabelstapler.

Der Begriff "Lastaufnahmevorrichtung" meint beispielsweise eine Gabelzinke oder einen Greifarm eines Flurförderfahrzeugs.

Der Begriff "Umgebung" meint den Raum, außerhalb einer aufgenommenen Last und der Lastaufnahmevorrichtung, insbesondere - von dem Flurförderfahrzeug aus gesehen - den Raum vor der aufgenommenen Last.

In der Beschreibung wird unterschieden zwischen einem von der Lastaufnahmevorrichtung "ausfahrbaren Sensor" mit einer rückwärts - entgegen seiner Ausfahrrichtung - gerichteten Blickrichtung auf eine Schattenseite der Last oder auf Teile davon, und einem "weiteren Sensor", der an dem Flurförderfahrzeug, z.B. an dessen Bedienerstand, an dessen Anbaugerät oder an dem rückwärtigen Ende der Gabelzinke oder des Greifarms angeordnet ist, mit einer Blickrichtung in Fahrtrichtung des Flurförderfahrzeugs, insbesondere auf die Vorderseite der Last, wenn diese von der Lastaufnahmevorrichtung aufgenommen ist.

Die Blickfelder der beiden Sensoren schließen sich zumindest teilweise aus. So schaut der weitere Sensor insbesondere auf die Vorderseite der aufgenommenen Last; er kann aber i.d.R. nicht die dem ausfahrbaren Sensor zugewandte Schattenseite der Last sehen. D.h.: "Schattenseite der Last" meint die von dem weiteren Sensor nicht erkennbaren Seiten der Last, insbesondere deren Rückseite. Umgekehrt schaut der ausfahrbare Sensor auf die Schattenseite der Last oder auf Teile davon; er kann aber i.d.R. nicht die dem weiteren Sensor zugewandte Vorderseite der Last sehen. Allerdings kann es auch Seiten bzw. Seitenflächen der Last geben, die von beiden Sensoren erkannt werden.

Der Begriff "Bilddaten" meint die von dem ausfahrbaren Sensor oder dem weiteren Sensor generierten Messdaten;
Der Begriff "Vermessungsdaten" meint die durch Auswertung der Bilddaten generierten Daten über die Kubatur der Last, d.h. die räumliche Form, Gestalt oder Struktur einzelner Seiten der Last.

Die von dem ausfahrbaren Sensor gewonnenen bzw. erzeugten digitalen Bilddaten der Schattenseite der Last können vorteilhafterweise beispielsweise für eine genauere Folgeberechnung des Volumens der Last verwendet werden. Zum Aufnehmen der Schattenseite der Last beansprucht die erfindungsgemäße Lastaufnahmevorrichtung weiterhin die besagte Verfahreinrichtung, welche das Ausfahren des Sensors aus der Lastaufnahmevorrichtung heraus in den Raum vor der Lastaufnahmeeinrichtung und/oder seitlich davon ermöglicht. Durch das Ausfahren wird die Möglichkeit geschaffen, digitale Bilddaten von der Schattenseite der Last aus einem gewissen Abstand heraus und damit auch unter verschiedenen Blickwinkeln zu generieren, was eventuelle Auswerte- bzw. Vermessungsergebnisse der Last verbessert. Ein weiterer Vorteil des Ausfahrens des Sensors besteht darin, dass auf diese Weise auch die Rückseite von Lasten erkannt werden kann, die über das freie Ende, d. h. die Spitze der Lastaufnahmevorrichtung überstehen; vorausgesetzt der Sensor wird über eine Wegstrecke ausgefahren, die größer ist als der Überstand der Last über der Spitze der Lastaufnahmevorrichtung.

Gemäß einem Ausführungsbeispiel ist der Sensor an der Lastaufnahmevorrichtung in ein Schutzgehäuse eingebaut. Dieses dient nicht nur als Schutz gegen Umwelteinflüsse, wie beispielsweise Schmutz, sondern kann auch als Schnittstelle zum Anbau an die Verfahreinrichtung, insbesondere an die Schubstange, fungieren.

Die erfindungsgemäße Verfahreinrichtung besteht im Wesentlichen aus zwei Teilsystemen, nämlich zum einen einer Sensorführung, insbesondere in Form einer Schubstange, und einem Antriebsstrang. Beide Teilsysteme sind gelenkig miteinander über ein Verbindungselement gekoppelt.

Der Antriebsstrang besteht im Wesentlichen aus einem Getriebemotor und einem nachgeschalteten Gewindetrieb, wodurch die rotatorische Bewegung des Getriebemotors in eine translatorische Antriebsbewegung, insbesondere eine translatorische Bewegung einer auf die Spindel aufgeschraubten Spindelmutter umgewandelt wird. Mit Hilfe des Verbindungselementes wird diese translatorische Antriebsbewegung der Spindelmutter auf die Schubstange der Sensorführung übertragen, was mit einer Kraftübertragung einhergeht.

Der gesamte Antriebsstrang, d. h. der Getriebemotor, eine optional vorhandene (Rutsch-)Kupplung und der Gewindetrieb, vorzugsweise ein Kugelgewindetrieb, bilden eine zusammenhängende Einheit.

Dieser einheitliche Antriebsstrang wird lediglich über ein einziges Schwenklager gehalten und ist alleine über dieses Schwenklager mit dem Grundkörper der Lastaufnahmevorrichtung verbunden. So wird verhindert, dass sich der Antriebsstrang aufgrund einer Durchbiegung des Grundkörpers der Lastaufnahmevorrichtung im Betriebsfall verklemmt, frühzeitig verschleißt oder gar zerstört wird. Ein bewusst vorgesehenes Axialspiel auf der Achse des Schwenklagers ermöglicht es vorteilhafterweise, zusätzlich Fluchtungsfehler des Gewindetriebs auszugleichen.

Das Schwenklager ist vorteilhafterweise über ein Axial- und Radiallager des Gewindetriebs mit dem Antriebsstrang gekoppelt. Die Spindel des Gewindetriebs ist somit nur einseitig an dem Lager gelagert; das andere Ende der Spindel ist frei; an ihm ist die Spindelmutter auf die Spindel aufgeschraubt. Die Spindelmutter ist vorzugsweise verschleißfest als Polymerspindelmutter ausgebildet und rotativ gelagert. Dies bietet den Vorteil, dass auch im Bereich der Spindelmutter Fluchtungsfehler aufgrund einer eventuellen lastbedingten Durchbiegung der Lastaufnahmevorrichtung ausgeglichen werden können.

Schließlich kann zwischen den Getriebemotor und den Gewindetrieb, vorzugsweise zwischen den Getriebemotor und das kombinierte Axial-Radiallager, eine Rutschkupplung geschaltet sein. Diese dient als Puffer zum Schutz des gesamten Antriebsstrangs gegen unerwünscht hohe Krafteinwirkung. Da der Gewindetrieb dank seiner großen Steigung nicht selbsthemmend ist, könnte dieser z. B. bei einer Kollision durch eine von außen, z. B. auf die Schubstange wirkende Kraft beschädigt werden. Die erfindungsgemäß vorgesehene Rutschkupplung sorgt in diesem Falle für eine drehmomentabhängige Abkopplung des Getriebemotors von dem Gewindetrieb und verhindert dadurch vorteilhafterweise eine Überlastung oder den Bruch von Elementen des Antriebsstranges.

Gemäß einem weiteren vorteilhaften Ausführungsbeispiel der Erfindung ist die Schubstange durch mindestens zwei in oder an dem Grundkörper der Lastaufnahmevorrichtung fixierte Schubstangenlager, vorzugsweise Linearkugellager aufgenommen und geführt. Diese mindestens zwei Lager sind in der Lastaufnahmevorrichtung eingelassen bzw. fixiert. Die beiden Lager sind in Längsrichtung der Schubstange versetzt zueinander angeordnet, so dass auch in diesem Bereich kleinste Verformungen des Gabelkörpers aufgrund starker Belastung nicht zu einer Verhinderung der Funktion der Schubstange z. B. durch Verklemmen führen.

Gemäß einem weiteren Ausführungsbeispiel der Erfindung weist die Schubstange eine Verdrehsicherung, beispielsweise in Form einer Führungsleiste oder Knickkante auf. Die Verdrehsicherung bewirkt, wie der Name sagt, dass eine Verdrehung der Schubstange insbesondere während des Betriebs der Sensoren unterbleibt, um deren Messergebnisse nicht zu verfälschen.

Alternativ kann allerdings eine Verdrehung der Schubstange und damit auch der an ihrem freien Ende angebrachten Sensoren durchaus gewünscht sein, um die Schattenseite der Last auch aus anderen Perspektiven, insbesondere unter verschiedenen Drehwinkeln des ausfahrbaren Sensors zu betrachten. Dafür kann eine Drehvorrichtung vorgesehen sein zum Drehen des ausfahrbaren Sensors insbesondere um die Längsachse der Schubstange. Die so generierten Bilddaten der Schattenseite der Last aus verschiedenen Perspektiven können zur genaueren Ermittlung der Kubatur der Rückseite der Last und damit für eine genauere Berechnung des Volumens der Last hilfreich sein.

Der Sensor an dem freien Ende der Schubstange benötigt für seinen Betrieb grundsätzlich elektrische Energie; diese wird typischerweise über eine elektrische Versorgungsleitung zugeführt; alternativ kann der Sensor jedoch auch akkubetrieben sein. Darüber hinaus muss der Sensor an eine Datenleitung angeschlossen sein zum Übertragen seiner Messergebnisse an eine Auswerteeinrichtung. Alternativ zu der Datenleitung kann auch eine drahtlose Funkverbindung, z. B. Bluetooth zur Datenübertragung installiert sein. Für die Verlegung von sowohl der elektrischen Versorgungsleitung wie auch der Datenleitung ist die Schubstange vorzugsweise als Hohlprofil ausgebildet zum Durchführen der besagten Leitungen zu dem Sensor. An dem dem Sensor abgewandten Ende der Schubstange sind die Leitungen für die elektrische Versorgung und/oder für die Datenübertragung in einem eigens dafür vorgesehenen Kabelkanal in dem Grundkörper geführt.

An dem der Schubstange abgewandten Ende des Kabelkanals werden die elektrischen Verbindungsleitungen an die Akkumulatoren des Flurförderfahrzeugs angeschlossen und es wird die Datenleitung an eine vorhandene Auswerteeinrichtung angeschlossen zum Auswerten der Daten im Hinblick auf eventuelle vorhandene Unregelmäßigkeiten in der Kubatur der Schattenseite der Last.

Für ein notwendiges Puffern von Leitungslängen kann zwischen dem Kabelkanal in dem Grundkörper und der Schubstange eine Kabelschleppkette ausgebildet sein zum Aufnehmen von Leitungslängen, wenn die Schubstange mit dem Sensor in die Lastaufnahmevorrichtung bzw. deren Grundkörper eingefahren ist und zum Bereitstellen von ausreichender Leitungslänge, wenn die Schubstange mit dem Sensor in die Umgebung ausgefahren ist.

Die gesamte Verfahreinrichtung mit ihren Teilsystemen Sensorführung und Antriebsstrang ist vorzugsweise in einem Verfahreinrichtungs-Aufnahmeraum in dem Grundkörper integriert. Wenn es sich bei dem Grundkörper um eine Gabelzinke handelt, ist der Verfahreinrichtungs-Aufnahmeraum typischerweise an der Unterseite der Gabelzinke offen und damit frei zugänglich, aber mit Hilfe einer Abdeckung abdeckbar, um den Aufnahmeraum vor Schmutz und Witterungseinflüssen zu schützen.

Die oben genannte Aufgabe der Erfindung wird weiterhin durch ein Flurförderfahrzeug gemäß Anspruch 17 sowie durch ein Verfahren zum Betreiben des Flurförderfahrzeugs nach Anspruch 19 gelöst. Vorteilhafte Ausgestaltungen dieser Lösungen sind Gegenstand der abhängigen Ansprüche. So werden gemäß dem erfindungsgemäßen Verfahren die von dem ausgefahrenen Sensor erzeugten digitalen Bilddaten der Schattenseite der Last vorzugsweise dahingehend klassifiziert, ob sie innerhalb einer vorgegebenen Fehlergrenze liegen oder nicht. Wenn die Fehlergrenze eingehalten wird, kann die beobachtete Schattenseite der Last als homogen angesehen werden und eine auf dieser Annahme basierende Volumenmessung der Last kann als im Geschäfts- und Rechtsverkehr gültig angesehen werden. Andererseits, wenn sich durch das erfindungsgemäße Verfahren bei der Klassifizierung der digitalen Bilddaten bzw. der Vermessungsdaten herausstellt, dass die Kubatur der Schattenseite der Last inhomogen ist, ist eine auf einer homogenen Kubatur basierende Volumenbestimmung der Last lediglich als Schätzwert zu bezeichnen, der jedoch für eine Verwendung im Rechts- und Geschäftsverkehr nicht genau genug ist und deshalb dort nicht verwendbar ist.

Weitere vorteilhafte Ausgestaltungen der erfindungsgemäßen Lastaufnahmevorrichtung, des erfindungsgemäßen Flurförderfahrzeugs und des erfindungsgemäßen Verfahrens zum Betreiben des Flurförderfahrzeugs sind Gegenstand der abhängigen Ansprüche. Dazu zählen z. B. eine Vorrichtung zur Erfassung der Länge des Ausfahrwegs des Sensors aus dem Grundkörper, die Erfassung eines gewünschten Drehwinkels α des Sensors um die Längsachse der Schubstange sowie eine in den Grundkörper integrierte Wiegeeinrichtung zum Erfassen des Gewichtes der Last.

Der Beschreibung sind 7 Figuren beigefügt, wobei
- Figur 1: ein Flurförderfahrzeug gemäß der vorliegenden Erfindung;
- Figur 2: eine Lastaufnahmevorrichtung gemäß der vorliegenden Erfindung;
- Figur 3: eine Detailansicht der Führung der Schubstange;
- Figur 4: eine Detailansicht des erfindungsgemäßen Antriebsstrangs;
- Figur 5: eine Seitenansicht der erfindungsgemäßen Lastaufnahmevorrichtung;
- Figur 6: ein Flurförderfahrzeug gemäß dem Stand der Technik mit aufgenommener Last mit homogener Kubatur an ihrer Rückseite; und
- Figur 7: ein Flurförderfahrzeug aus dem Stand der Technik mit irregulärer Kubatur an ihrer Rückseite
zeigt.

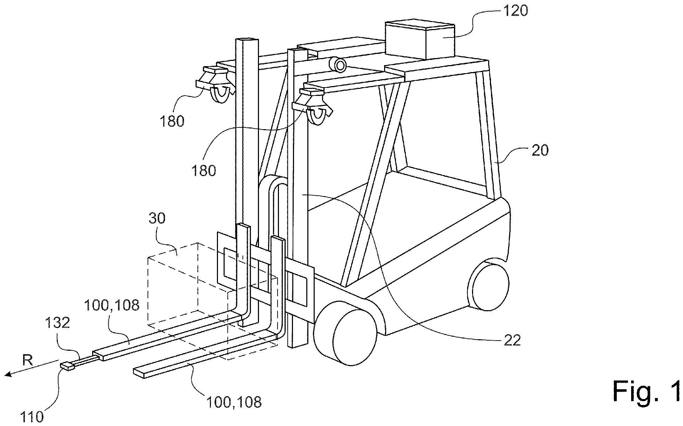

Die Erfindung wird nachfolgend unter Bezugnahme auf die genannten Figuren 1 bis 5 in Form von Ausführungsbeispielen detailliert beschrieben. In allen Ausführungsbeispielen sind gleiche technische Elemente mit gleichen Bezugszeichen bezeichnet.

Figur 1 zeigt ein erfindungsgemäßes Flurförderfahrzeug 20 mit einem Anbaugerät 22 und zwei daran montierten Gabelzinken. Zumindest eine der beiden Gabelzinken ist in Form einer Lastaufnahmevorrichtung 100 mit einem Grundkörper 108 im Sinne der vorliegenden Erfindung ausgebildet. An dieser Lastaufnahmevorrichtung ist ein Sensor 110 mit Hilfe einer Schubstange 132 in einer Ausfahrrichtung R ausgefahren. Der Sensor 110 ist mit seiner Blickrichtung entgegen der Ausfahrrichtung R und hier beispielsweise auch entgegen der Fahrtrichtung des Flurförderfahrzeugs 20 ausgerichtet. Seine Blickrichtung ist insbesondere auf die von dem Flurförderfahrzeug abgewandte Schattenseite einer eventuell aufgenommenen Last 30 ausgerichtet.

Weiterhin ist an dem Flurförderfahrzeug 20, hier beispielsweise an dem Hubmast des Anbaugerätes für die Gabelzinken, ein weiterer digitaler Sensor 180 angeordnet. Dieser ist mit seiner Blickrichtung in Fahrtrichtung des Flurförderfahrzeugs und auf die eventuell aufgenommene Last ausgerichtet zum Erzeugen von Bildern von den Seiten der Last 30, welche von dem Flurförderfahrzeug 20 aus bzw. von diesem weiteren Sensor 180 aus erkennbar sind. Eine Auswerteeinrichtung 120 ist nicht nur ausgebildet zum Auswerten der digitalen Bilddaten des ausfahrbaren Sensor 110, sondern auch zum Auswerten der digitalen Bilddaten des weiteren Sensors 180, jeweils im Hinblick auf geometrische Vermessungsdaten der von den jeweiligen Sensoren 110, 180 erkennbaren Seiten der Last.

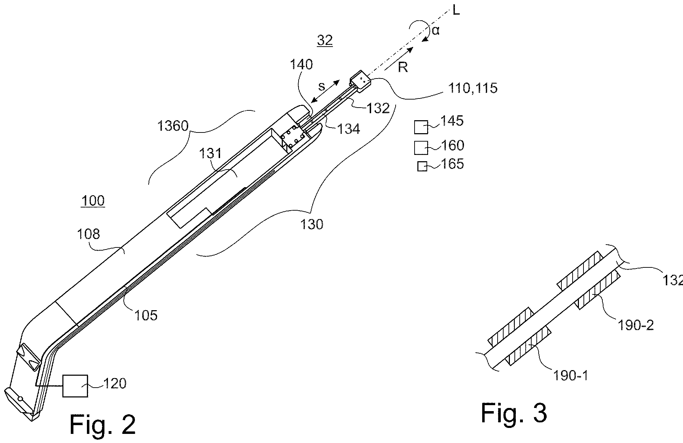

Figur 2 zeigt die erfindungsgemäße Lastaufnahmevorrichtung 100 zum Aufnehmen einer Last (hier nicht gezeigt) mit Blick auf ihre Unterseite. Zu erkennen ist, dass die Lastaufnahmevorrichtung 100 den Grundkörper 108 in Form einer Gabelzinke oder eines Greifarms aufweist. Zu erkennen ist weiterhin der digitale Sensor 110, welcher in ein Schutzgehäuse 115 eingebaut ist und mit Hilfe der optional teleskopierbaren Schubstange 132 aus einem Sensor-Aufnahmeraum 140 an dem vorderen freien Ende des Grundkörpers 180 ausgefahren ist. Das Ausfahren erfolgt in der Ausfahrrichtung R um eine Wegstrecke s mit Hilfe eines Antriebsstrangs 1360 einer Verfahreinrichtung 130, wobei die besagte Schubstange 132 Teil dieser Verfahreinrichtung 130 ist.

Wie in Figur 2 zu erkennen ist, erfolgt das Ausfahren des Sensors 110 in die Umgebung der Lastaufnahmevorrichtung 100, insbesondere - von dem Flurförderfahrzeug 20 aus gesehen - in den Raum 32 vor der Lastaufnahmevorrichtung 100. Die Verfahreinrichtung 130 ist weiterhin ausgebildet, den digitalen Sensor 110 wieder zurück in seinen Sensor-Aufnahmeraum 140 zu verfahren.

Der digitale Sensor 110 ist erfindungsgemäß insbesondere ausgebildet, die Kubatur, d . h. die Form bzw. Gestalt und Struktur der Schattenseite der Last 30 zu erkennen, auf die er ausgerichtet ist, siehe Fig. 1. Zu diesem Zweck kann der Sensor 110 beispielsweise in Form eines Radarsensors, einer digitalen 2D- oder 3D-Kamera und/oder in Form eines Laserscanners, beispielsweise eines Light-Imaging, Detection and Ranging LIDAR-Sensors ausgebildet sein. Vorzugsweise ist er ausgebildet zum Erfassen von Tiefeninformation der betrachteten Schattenseite.

Mit ihrem dem Sensor 110 abgewandten Ende ist die Schubstange 132 in mindestens einem, vorzugsweise jedoch mindestens zwei Schubstangenlagern 190 in oder an dem Grundkörper 108 verschiebbar gelagert; siehe Fig. 3. Vorzugsweise sind mindestens zwei kurze Schubstangenlager 190-1, 190-2 in Längsrichtung L der Schubstange hintereinander angeordnet. Dies hat den Vorteil, dass eine Verbiegung des Grundkörpers aufgrund einer großen Lasteinwirkung nicht zu einem Verklemmen der Schubstange in den Schubstangenlagern führt, sondern dass das Aus- und Einfahren der Schubstange mit dem Sensor nach wie vor funktionsfähig bleibt. Die Schubstangenlager 190-1, 190-2 sind vorzugsweise in Form von Linearkugellagern ausgebildet.

Neben der Schubstange 132 und deren Schubstangenlagern 190-1, 190-2 umfasst die erfindungsgemäße Verfahreinrichtung 130 auch einen Antriebsstrang 1360, der das Aus- und Einfahren der Schubstange 132 mit dem Sensor 110 bewirkt.

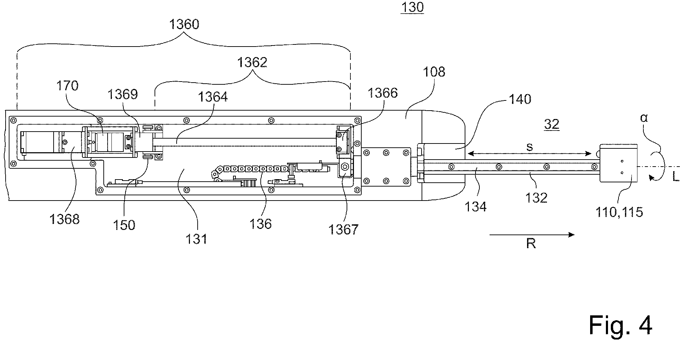

Gemäß Fig. 4 weist der Antriebsstrang 1360 einen Gewindetrieb 1362 mit einer Spindel 1364 und einer auf die Spindel aufgeschraubten Spindelmutter 1366 auf, an welche die Schubstange 132 mit Hilfe eines Verbindungselementes 1367 angeflanscht ist. Dem Gewindetrieb 1362 ist ein Getriebemotor 1368 zugeordnet zum linearen Verfahren der Spindelmutter 1366 entlang der Spindel zusammen mit der angeflanschten Schubstange 132 und dem Sensor 110 durch Drehantreiben der Spindel. Insofern bewirkt der Gewindetrieb 1362 letzten Endes eine Transformation der Drehbewegung des Getriebemotors 1368 in eine translatorische Bewegung der Spindelmutter und damit - aufgrund der besagten Kopplung über das Verbindungselement 1367 das besagte Aus- und Einfahren des Sensors 110.

Wie in Figur 4 weiterhin zu erkennen ist, sind der Getriebemotor 1368 und der Gewindetrieb 1362 über eine zwischengeschaltete Rutschkupplung 170 miteinander drehgekoppelt. Der so ausgestaltete Antriebsstrang 1360 ist vorzugsweise über ein kombiniertes Axial- und/oder Radiallager 1369, das seinerseits in einem Schwenklager 150 gelagert ist, mit dem Grundkörper 108 verbunden. Die Kippachse bzw. Schwenkachse A des Schwenklagers 150 ist senkrecht zur Längsachse und parallel zu einer virtuellen Biegeachse des Grundkörpers ausgerichtet, um die sich der Grundkörper bei Belastung biegt. Wie einleitend beschrieben, gewährleistet diese einzige und besonders ausgestaltete Lagerung des Antriebsstrangs dessen Funktionsfähigkeit auch bei einer Verbiegung des Grundkörpers 108 bei starker Lastaufnahme.

Der Getriebemotor 1368 kann als elektromagnetischer, pneumatischer oder hydraulischer Antrieb ausgebildet sein.

In den Grundkörper 108 der Lastaufnahmevorrichtung 100 kann eine Wegmessvorrichtung 160 eingebaut sein zum Erfassen der Größe der Wegstrecke s, um welche der Sensor 110 jeweils aus dem Grundkörper 108 herausgefahren wird.

Die Schubstange 132 kann entweder verdrehsicher oder verdrehbar an dem Grundkörper 108 gelagert sein. Die Verdrehbarkeit ermöglicht unterschiedliche Blickrichtungen des Sensors 110 bei unterschiedlichen Verdrehwinkeln α. So können auch unterschiedliche Bilder von der Schattenseite der Last generiert werden bei unterschiedlichem Ausfahrweg s und/oder unterschiedlichem Verdrehwinkel des Sensors.

Eine Verdrehsicherung der Schubstange 132 kann beispielsweise dadurch realisiert werden, dass der Querschnitt der Schubstange nicht rund, sondern eckig ausgebildet wird. Dies kann beispielsweise dadurch realisiert werden, dass eine Führungsleiste auf einen rohrförmigen Grundkörper der Schubstange aufgesetzt wird, oder dass die Schubstange in Form eines Hohlprofils mit nicht-rundem Querschnitt, d. h. z. B. mit vieleckigem Querschnitt bzw. mit mindestens einer Knickkante ausgebildet wird.

Die Schubstangenlager 190-1, 190-2 sind dann komplementär zu dem Querschnitt der Schubstange auszubilden, so dass die Schubstange in den Lagern verdrehsicher gelagert und führbar ist.

Wenn demgegenüber die Schubstange 132 mit dem Sensor 110 verdrehbar sein soll, ist eine Drehvorrichtung 145 vorzusehen zum Drehen der ausfahrbaren Schubstange und/oder des ausfahrbaren Sensors 110 um einen Drehwinkel α z. B. um die Längsachse L der Schubstange 132 in eine gewünschte Blickrichtung.

Wie in den Figuren 2 bis 4 zu erkennen ist, ist die gesamte Verfahreinrichtung 130, d. h. die Schubstange 132 mit ihren Schubstangenlagern 190-1, 190-2 sowie der gesamte Antriebsstrang 1360 in einem Verfahreinrichtungs-Aufnahmeraum 131 in dem Grundkörper 108 integriert. Dieser Aufnahmeraum und damit die besagte Verfahreinrichtung sind vorzugsweise an der Unterseite des Grundkörpers 108 zugänglich, wie in Figur 2 gezeigt. Der Aufnahmeraum 131 ist jedoch vorzugsweise mit Hilfe einer Abdeckung (in Figur 2 nicht gezeigt) abdeckbar und auf diese Weise gegen Schmutz und Umwelteinflüsse schützbar.

Weiterhin kann in oder an dem Grundkörper 108 unabhängig von der Verfahreinrichtung 130 eine Wiegeeinrichtung 165 angeordnet sein zum Bestimmen des Gewichtes der von der Lastaufnahmevorrichtung aufgenommenen Last 30.

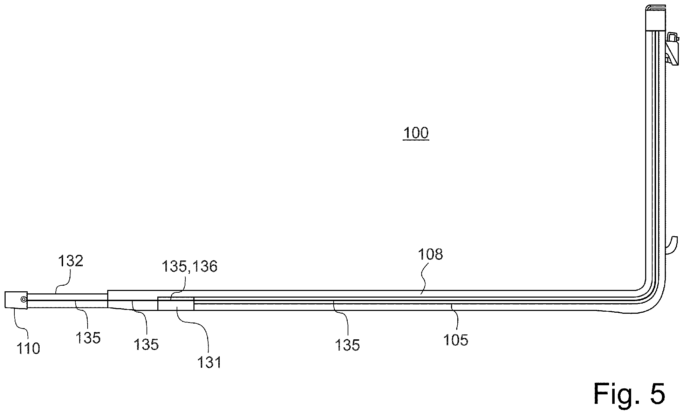

Schließlich ist in Figur 5 ein Kabelkanal 105 in dem Grundkörper 108 zu erkennen zum Hindurchführen von elektrischen Versorgungs- und/oder Datenleitungen 135 von dem Aufnahmeraum 131 zu dem Flurförderfahrzeug, um dort an die Energieversorgung, typischerweise ein Akkumulator sowie an die Bilddaten-Auswerteeinrichtung 120 angeschlossen zu werden.

Optional kann, wie in Figur 4 erkennbar, zwischen dem Ende der Kabelkanals 105 und der vorzugsweise als Hohlwellenprofil ausgebildeten Schubstange 132 in dem Aufnahmeraum 131 eine Kabelschleppe 136 angeordnet sein zum Puffern bzw. Zwischenspeichern von Kabellängen der elektrischen Versorgungs- und/oder Datenleitungen 135. Konkret ist diese Kabelschleppe 136 ausgebildet, Teillängen der besagten Leitungen zwischenzuspeichern, wenn die Schubstange 132 mit dem Sensor 110 in die Lastaufnahmevorrichtung 100 bzw. deren Grundkörper 108 eingefahren ist, und zum Bereitstellen von ausreichender Länge der Leitungen 135, wenn die Schubstange 132 mit dem Sensor 110 in die Umgebung der Lastaufnahmevorrichtung 100 ausgefahren ist bzw. wird.

Der Betrieb des erfindungsgemäßen Flurförderfahrzeugs 20 wird nachfolgend beschrieben:
Dieses Verfahren weist insbesondere folgende Schritte auf:
- Aufnehmen einer Last 30 mit der Lastaufnahmevorrichtung 100;
- Ausfahren des Sensors 110 in einer Ausfahrrichtung R nach außerhalb des Grundkörpers 108 der Lastaufnahmevorrichtung 100 in die Umgebung der Last 30;
- Erzeugen von digitalen Bilddaten von mindestens einer Schattenseite der Last 30, die erkennbar wird bei einer - bezüglich der Ausfahrrichtung R rückwärtsgewandten Blickrichtung des ausfahrbaren Sensors 110; und
- Auswerten der digitalen Bilddaten im Hinblick auf geometrische Vermessungsdaten der betrachteten Schattenseite der Last 30.

Die erfassten geometrischen Vermessungsdaten werden dahingehend beurteilt bzw. klassifiziert, ob sie - innerhalb vorgegebener Fehlergrenzen - eine homogene oder eine inhomogene Seite der Last 30 repräsentieren.

Das Volumen der Last 30 wird traditionell ermittelt auf Basis der von dem weiteren Sensor 180 an dem Flurförderfahrzeug 20 generierten Bilddaten und der daraus abgeleiteten geometrischen Vermessungsdaten. Dabei beziehen sich diese Bild- und Vermessungsdaten auf die von dem weiteren Sensor 180 erkennbaren Seiten der Last 30. Für die von dem weiteren Sensor 180 nicht-erkennbaren Schattenseite der Last 30 wird bei der traditionellen Volumenberechnung vorausgesetzt, dass diese homogen bzw. erwartbar sind. Dies bedeutet z. B., dass bei einer vom Bedienstand der Flurförderfahrzeugs 20 aus gesehen quaderförmigen Last, vorausgesetzt wird, dass deren Schatten- bzw. Rückseite plan ist und dass dort keine Ausbeulungen oder weitere Lasten vorhanden sind. Sollte in diesem Fall jedoch mit Hilfe des erfindungsgemäßen Verfahrens und dem ausfahrbaren Sensor 110 festgestellt werden, dass die Schattenseite der Last 30 nicht homogen ist, so wird das Ergebnis der zuvor erfolgten Volumenberechnung als im Rechts- und/oder Geschäftsverkehr nicht-verwertbarer Schätzwert klassifiziert.

Das erfindungsgemäße Verfahren kann auch die Ermittlung des Gewichtes der von der Lastaufnahmevorrichtung 100 aufgenommen Last 30 vorsehen, vorzugsweise durch die in den Grundkörper 108 integrierte Wiegeeinrichtung 165. Weiterhin können der Ausfahrweg s und/oder der Drehwinkel α des ausfahrbaren Sensors 110 beim Ausfahren dieses Sensors aus dem Grundkörper 108 erfasst werden, um bei der Ermittlung der geometrischen Vermessungsdaten von insbesondere der Schatten- oder Rückseite der Last mitberücksichtigt zu werden. Die Auswertung dieser Daten im Hinblick auf die Homogenität bzw. Inhomogenität der Schattenseite der Last wird auf diese Weise verbessert.

Eine weitere Verbesserung bei der Volumenberechnung der Last kann dadurch erreicht werden, dass die Schattenseite der Last nicht nur aus einer Blickposition, sondern aus verschiedenen bzw. mehreren Blickpositionen betrachtet wird und in den verschiedenen Blickpositionen jeweils unterschiedliche Bilddaten aufgenommen und erzeugt werden. Diese unterschiedlichen Blickpositionen bzw. Blickrichtungen können sich ergeben durch verschiedene Drehwinkel des ausfahrbaren Sensors 110 und/oder durch verschiedene Wegstrecken s, um die der ausfahrbare Sensor 110 ausgefahren wurde.

### Bezugszeichenliste:

- 20: Flurförderfahrzeug
- 22: Anbaugerät
- 30: Last
- 32: Raum vor der Lastaufnahmevorrichtung
- 100: Lastaufnahmevorrichtung
- 105: Kabelkanal
- 108: Grundkörper
- 110: Sensor, ausfahrbar
- 115: Schutzgehäuse
- 120: Auswerteeinrichtung
- 130: Verfahreinrichtung
- 131: Verfahreinrichtungs-Aufnahmeraum
- 132: Schubstange
- 134: Verdrehsicherung
- 135: Versorgungs- und/oder Datenleitungen
- 136: Kabelschleppe
- 140: Sensor-Aufnahmeraum
- 145: Drehvorrichtung
- 150: Schwenklager
- 160: Wegmessvorrichtung
- 165: Wiegeeinrichtung
- 170: Rutschkupplung
- 180: weiterer digitaler Sensor
- 190-1, 190-2: Schubstangenlager
- 1360: Antriebsstrang
- 1362: Gewindetrieb
- 1364: Spindel
- 1366: Spindelmutter
- 1367: Verbindungselement
- 1368: Getriebemotor
- 1369: Axial- und/oder Radiallager

- α: Drehwinkel
- A: Schwenkachse
- L: Längsachse der Schubstange
- R: Ausfahrrichtung
- s: Ausfahrstrecke

## Patentansprüche

1. Lastaufnahmevorrichtung (100) eines Flurförderfahrzeugs (20) zum Aufnehmen einer Last, aufweisend:
einen Grundkörper (108) in Form einer Gabelzinke oder eines Greifarms;
mindestens einen digitalen Sensor (110) zum Erzeugen von digitalen Bilddaten; und
eine Auswerteeinrichtung (120) zum Auswerten der digitalen Bilddaten;
**dadurch gekennzeichnet,**
**dass** eine Verfahreinrichtung (130) vorhanden ist zum Ausfahren des Sensors (110) in einer Ausfahrrichtung (R) in die Umgebung der Lastaufnahmevorrichtung (100), insbesondere - von dem Flurförderfahrzeug (20) aus gesehen - in den Raum (32) vor der Lastaufnahmevorrichtung (100), und zurück; und
**dass** der Sensor (110) in eine bezogen auf die Ausfahrrichtung (R) rückwärtsgewandte Blickrichtung ausgerichtet ist zum Erzeugen der digitalen Bilddaten von zumindest Teilen der Schattenseite der Last.

2. Lastaufnahmevorrichtung (100) nach Anspruch 1,
**dadurch gekennzeichnet,**
**dass** es sich bei dem Sensor (110) beispielsweise um einen Radarsensor, eine digitale 2D- oder 3D-Kamera und/oder einen Laserscanner, insbesondere ein Lidar, jeweils vorzugsweise auch zum Erfassen von Tiefeninformationen, handelt.

3. Lastaufnahmevorrichtung (100) nach einem der vorangegangenen Ansprüche,
**dadurch gekennzeichnet,**
**dass** der Grundkörper (108), insbesondere an seinem vorderen freien Ende, einen Sensor-Aufnahmeraum (140) für den Sensor (110) aufweist, aus dem heraus und in den hinein der Sensor mit Hilfe der Verfahreinrichtung (130) verfahrbar ist.

4. Lastaufnahmevorrichtung (100) nach einem der vorangegangenen Ansprüche, **gekennzeichnet durch**
ein Schutzgehäuse (115), in welches der Sensor (110) eingebaut ist.

5. Lastaufnahmevorrichtung (100) nach einem der vorangegangenen Ansprüche,
**dadurch gekennzeichnet,**
**dass** die Verfahreinrichtung (130) aufweist:
- eine optional teleskopierbare Schubstange (132), die mit ihrem einen Ende in oder an dem Grundkörper (108) verschiebbar gelagert ist, und an deren anderem Ende der Sensor, vorzugsweise in dem Schutzgehäuse (115), befestigt ist; und
- einen Antriebsstrang (1360) zum beispielsweise linearen Verfahren, insbesondere Ausfahren der Schubstange (132) mit dem Sensor (110) in die Umgebung der Lastaufnahmevorrichtung (100) und zurück.

6. Lastaufnahmevorrichtung (100) nach Anspruch 5,
**dadurch gekennzeichnet,**
**dass** der Antriebsstrang (1360) aufweist:
einen Gewindetrieb (1362) mit einer Spindel (1364) und einer auf die Spindel aufgeschraubten Spindelmutter (1366), an welche die Substange (132) mit Hilfe eines Verbindungselementes (1367) angeflanscht ist;
einen Getriebemotor (1368) zum linearen Verfahren der Spindelmutter (1366) entlang der Spindel zusammen mit der angeflanschten Schubstange (132) und dem Sensor (110) durch Drehantreiben der Spindel.

7. Lastaufnahmevorrichtung (100) nach einem der Ansprüche 5 oder 6,
**dadurch gekennzeichnet,**
**dass** der Antriebsstrang (1360) als zusammenhängende Einheit ausgebildet ist;
**dass** der Antriebsstrang über lediglich ein einziges Schwenklager (150) mit dem Grundkörper (108) verbunden ist;
**dass** das Schwenklager (150), vorzugsweise mit axialem Spiel, ausgebildet ist zum Gewähren einer Kippbewegung des Antriebsstrangs (1360), insbesondere um eine Schwenkachse (A) des Schwenklagers im Falle einer Verbiegung des Grundkörpers bei Belastung mit der Last (30); und
**dass** der Antriebsstrang (1360) vorzugsweise über ein Axial- und/oder Radiallager (1369) an dem Schwenklager (150) gelagert ist.

8. Lastaufnahmevorrichtung (100) nach einem der vorangegangenen Ansprüche,
**dadurch gekennzeichnet,**
**dass** eine Wegmessvorrichtung (160) vorgesehen ist zum Erfassen der Größe der Strecke (s), um welche der Sensor (110) jeweils aus dem Grundkörper (108) gefahren ist.

9. Lastaufnahmevorrichtung (100) nach einem der Ansprüche 6 bis 8,
**gekennzeichnet durch**
eine Rutschkupplung (170), die zwischen den Getriebemotor (1368) und den Gewindetrieb (1362), vorzugsweise zwischen den Getriebemotor und das Axial- und/oder Radiallager (1369) geschaltet ist.

10. Lastaufnahmevorrichtung (100) nach einem der Ansprüche 6 bis 9,
**dadurch gekennzeichnet,**
**dass** der Getriebemotor (1368) als elektromagnetischer, pneumatischer oder hydraulischer Antrieb ausgebildet ist.

11. Lastaufnahmevorrichtung (100) nach einem der Ansprüche 5 bis 10,
**gekennzeichnet durch**
vorzugsweise zwei in oder an dem Grundkörper (108) fixierte Schubstangenlager (190-1, 190-2), vorzugsweise in Form von Linearkugellagern, die in Längsrichtung der Schubstange (132) versetzt zueinander angerordnet sind zum Lagern der verschiebbaren Schubstange.

12. Lastaufnahmevorrichtung (100) nach Anspruch 11,
**dadurch gekennzeichnet,**
**dass** die Schubstange (132) eine Verdrehsicherung (134), beispielsweise in Form einer Führungsleiste oder einer Knickkante, aufweist; und
**dass** die Schubstangenlager (190-1, 190-2) ausgebildet sind, die Schubstange (132) mit Hilfe der Verdrehsicherung (134) verdrehsicher zu lagern und zu führen.

13. Lastaufnahmevorrichtung (100) nach einem der Ansprüche 5 bis 11,
**dadurch gekennzeichnet,**
**dass** eine Drehvorrichtung (145) vorgesehen ist zum Drehen des ausfahrbaren Sensors (110) um einen Drehwinkel (α) in eine gewünschte Blickrichtung, insbesondere um die Längsachse (L) der Schubstange (132).

14. Lastaufnahmevorrichtung (100) nach einem der Ansprüche 6 bis 13,
**dadurch gekennzeichnet,**
**dass** in dem Grundkörper (108) ein Kabelkanal (105) ausgebildet ist, und dass die Schubstange (132) als Hohlwellenprofil ausgebildet ist, jeweils zum Hindurchführen derselben elektrischen Versorgungs- und/oder Datenleitungen, insbesondere von dem Flurförderfahrzeug (20) zu dem ausfahrbaren Sensor (110); und
**dass** - optional - zwischen dem Ende des Kabelkanals (105) und dem Hohlwellenprofil (132) eine Kabelschleppkette (136) in der Lastaufnahmevorrichtung (100) vorgesehen ist zum Puffern einer Teillänge der Leitungen, wenn die Schubstange (132) mit dem Sensor (110) in die Lastaufnahmevorrichtung (100) eingefahren ist, und zum Bereitstellen von ausreichender Länge der Leitungen, wenn die Schubstange (132) mit dem Sensor (110) in die Umgebung ausgefahren ist.

15. Lastaufnahmevorrichtung (100) nach einem der vorangegangenen Ansprüche,
**dadurch gekennzeichnet,**
**dass** die Verfahreinrichtung (130) in einem Verfahreinrichtungs-Aufnahmeraum (131) in dem Grundkörper (108) integriert ist; und
**dass**, wenn es sich bei dem Grundkörper (108) um eine Gabelzinke handelt; und
**dass** der Verfahreinrichtungs-Aufnahmeraum (131) an der Oberseite oder der Unterseite des Grundkörpers (108) offen, aber dort auch mit einer Abdeckung abdeckbar ist.

16. Lastaufnahmevorrichtung (100) nach einem der vorangegangenen Ansprüche, **gekennzeichnet durch**
eine Wiegeeinrichtung (165) zum Bestimmen des Gewichtes der Last.

17. Flurförderfahrzeug (20),
**gekennzeichnet durch**
ein Anbaugerät (22); und
mindestens eine an dem Anbaugerät montierte Lastaufnahmevorrichtung (100) nach einem der vorangegangenen Ansprüche mit der aufgenommenen Last (30) oder ohne die aufgenommene Last (30),
wobei die - bezogen auf die Ausfahrrichtung (R) - rückwärtsgewandte Blickrichtung des ausfahrbaren Sensors (110) - beispielsweise entgegen der Fahrtrichtung des Flurförderfahrzeugs - einer Blickrichtung auf die von dem Flurförderfahrzeug abgewandten Schattenseiten der Last (30) entspricht.

18. Flurförderfahrzeug (20) nach Anspruch 17,
**gekennzeichnet durch**
mindesten einen an dem Flurförderfahrzeug, insbesondere dem Bedienstand, dem Anbaugerät (22) oder dem Rücken der Lastaufnahmevorrichtung (100 befestigten weiteren digitalen Sensor (180) mit Blickrichtung in Fahrtrichtung des Flurförderfahrzeugs (20) und auf die aufgenommene Last (30) zum Erzeugen von digitalen Bilddaten von den Seiten der Last, welche von dem Flurförderfahrzeug (20) aus bzw. von dem weiteren Sensor (180) erkennbar sind;
wobei die Auswerteeinrichtung (120) weiterhin ausgebildet ist zum Auswerten der digitalen Bilddaten des weiteren Sensors (180) im Hinblick auf geometrische Vermessungsdaten derjenigen Seiten der Last (30), welche von dem Flurförderfahrzeug (20) bzw. dem weiteren Sensor (180) aus erkennbar sind.

19. Verfahren zum Betreiben des Flurförderfahrzeugs (20) nach Anspruch 17 oder 18,
aufweisend folgende Schritte:
- Aufnehmen einer Last (30) mit der Lastaufnahmevorrichtung (100);
- Ausfahren des Sensors (110) in einer Ausfahrrichtung (R) nach außerhalb des Grundkörpers (108) der Lastaufnahmevorrichtung (100) in die Umgebung der Last (30);
- Erzeugen von digitalen Bilddaten von mindestens einer Schattenseite der Last (30), die erkennbar wird bei einer - bezüglich der Ausfahrrichtung rückwärtsgewandten Blickrichtung des ausfahrbaren Sensors (110); und
- Auswerten der digitalen Bilddaten im Hinblick auf geometrische Vermessungsdaten der betrachteten Schattenseite der Last (30).

20. Verfahren nach Anspruch 19,
**dadurch gekennzeichnet,**
**dass** die erfassten geometrischen Vermessungsdaten dahingehend beurteilt bzw. klassifiziert werden, ob sie - innerhalb vorgegebener Fehlergrenzen - eine inhomogene oder eine homogene Seite der Last (30) repräsentieren.

21. Verfahren nach Anspruch 20,
**dadurch gekennzeichnet,**
**dass** das Volumen der Last (30) ermittelt wird auf Basis der von dem weiteren Sensor (180) generierten Bilddaten und der daraus abgeleiteten geometrischen Vermessungsdaten der von dem weiteren Sensor (180) erkennbaren Seiten der Last (30) unter der Annahme, dass die nichterkennbare Rückseite der Last homogen ist; und
**dass** in dem Falle, dass die Rückseite der Last mit Hilfe der vorangegangenen Verfahrensschritte als inhomogen klassifiziert wird, das ermittelte Volumen der Last als im Rechts- und/oder Geschäftsverkehr nicht verwertbarer Schätzwert klassifiziert wird.

22. Verfahren nach einem der Ansprüche 19 bis 21,
**dadurch gekennzeichnet,**
**dass** das Gewicht der von der Lastaufnahmevorrichtung (100) aufgenommenen Last (30) ermittelt wird, vorzugsweise durch eine in den Grundkörper (108) der Lastaufnahmevorrichtung integrierte Wiegeeinrichtung (165).

23. Verfahren nach einem der Ansprüche 19 bis 22,
**dadurch gekennzeichnet,**
**dass** der Ausfahrweg (s) und/oder der Drehwinkel (α) des Sensors (110) beim Ausfahren aus dem Grundkörper (108) der Lastaufnahmevorrichtung (100) erfasst werden, um bei der Ermittlung der geometrischen Vermessungsdaten von insbesondere der Rückseite der Last mit berücksichtigt zu werden.

24. Verfahren nach einem der Ansprüche 19 bis 23,
**dadurch gekennzeichnet,**
**dass** die digitalen Bilddaten erzeugt werden, wenn der Sensor (110) an verschiedene Positionen entlang der Ausfahrstrecke (s) anhält und/oder in verschiedene Drehwinkel (α) verdreht ist.
